# EUROPEAN PATENT APPLICATION

(11) **EP 3 591 824 A1**
(43) Date of publication of application: **08.01.2020**
(21) Application number: 18181248.8
(22) Date of filing: 02.07.2018
(51) Int. Cl.: H02M 3/28, H02J 7/02, H02J 13/00, H02J 50/10, H02J 50/40

(54) **WIRELESS POWER TRANSFER**

(71) Applicant: Delta Electronics (Thailand) Public Co., Ltd., Samutprakarn 10280 (TH)
(72) Inventor: RICHTER, Ulrich, 79106 Freiburg (DE)
(74) Representative: Keller & Partner Patentanwälte AG

(57) **Abstract**

A wireless power transmission system (11) includes a plurality of power transfer units (7.1, 7.2) that are arranged in parallel between a power source (4) and a single system power output (16) to which a load (5) is connectable. Each power transfer unit (7.1, 7.2) includes a primary (12) and a secondary (13) arranged on different sides of an airgap (8) where the primary (12) usually is part of a charging station and the secondary (13) usually is part of a mobile device together with the load (5) which for example is a battery of a vehicle to be charged. Power from the power source (4) is transferred to the load (5) by inductive coupling (9). To do so, a previously determined master secondary side counts the number of operative power transfer units (7.1, 7.2) and communicates this number to the other secondary sides (13) through communication bus (10.1). And the load (5) communicates to the secondary sides (13) an overall power set value based on which each secondary side (13) determines its own unit power set value by dividing the overall power set value by the number of operative power transfer units (7.1, 7.2).

## Description

### Technical Field

The invention relates to a wireless power transfer arrangement for wirelessly transferring power from a power input side across an airgap to a power output side, including a power output at the power output side for supplying a system output power to a load. The invention further relates to a corresponding method for wireless power transfer.

### Background Art

Electrical energy is used in many different applications. To power electrically driven devices, items or objects that are not permanently connected to a source of electrical power, such devices, items or objects are often equipped with one or more batteries that are used to store energy for powering such a device, item or object when it is not connected to a power source. Examples for such mobile devices are automotive vehicles such as cars, lorries, motorbikes, trains, boats, ships, planes, helicopters and the like but also industrial vehicles such as forklifts, AGVs (automated guided vehicles), cleaning machines, elevators and the like or electrically operated equipment for lifting, displacing or transporting goods of any kind. Further examples of mobile devices are also cell phones, PDAs (personal digital assistants), mobile music players and the like. All these mobile devices, items or objects usually include a battery for operating it.

The invention deals with operating such electrical loads and/or charging their batteries. Whereas Lead-acid batteries have often been used to store power for operating such electrical loads, Li-Ion batteries are now often used for this purpose. One of the reasons is that they may be charged with much higher c-rates. Lead-acid batteries may be charged with a c-rate of about 0.1c to 0.2c. This means that a 600 Ah lead-acid battery may be charged with a current of about 60 Amperes to 120 Amperes and would require about 5 to 10 hours. Li-Ion batteries may be charged with a c-rate of up to 1c wherefore a 600 Ah Li-Ion battery may be charged with a current of up to 600 Amperes which reduces the charging time down to about 1 hour. In addition, Li-Ion batteries can be charged occasionally without doing damage to the battery which would happen with Lead-acid batteries when applying multiple short charging cycles for just a small number of minutes.

The high charging currents with Li-Ion batteries may however cause problems with a wire-based charger where the charging current is fed from the power source to the battery via a cable connection where the cable is connected to the source and/or the battery by connectors. The high charging currents would require a power cable with a large copper diameter and heavy duty connectors. Accordingly, the power cables are difficult to handle and the connectors would wear out fast. With an occasional charging such connectors would wear out within weeks.

To overcome the problems with the power cables the power transfer from a power source to a load such as for example a battery often is done by wireless power transfer. Such a wireless power transfer system is called an inductive power transfer (IPT) system in case the power is transferred wirelessly by inductive coupling. Such IPT Systems do work with loosely coupled inductors.

The primary side of such a wireless power transfer system usually includes an input stage and a primary pad where the input stage is connected to a power source and typically converts the input power to an AC input power suited as an input for the primary pad which induces a more or less directed magnetic field. The secondary side of such a wireless power transfer system includes a secondary pad and an output stage where the secondary pad is positioned within the magnetic field produced by the primary and the output stage converts the AC power received from the secondary pad to a DC current that is used for driving the load such as for example for charging a battery. To control the power transfer from the primary to the secondary the input stage and the output stage usually communicate with each other either via a wired or a wireless communication link.

The primary and the secondary pad both are resonators with a coil, a flux guiding element and a capacitor. The capacitor forms a resonant circuit with the coil or the resulting inductor respectively when wound on a magnetic core and serves to overcome reactive losses. Both resonators are tuned to the same fixed working frequency.

However, the amount of power that can be transferred from the power source to the load is limited. It is for example limited by the amount of power that the power source is able to deliver. Or it is limited by the limitations of the single components used to implement the power transfer system. In particular, the amount of power that can be transferred is limited by the limited capability of the primary and secondary pads to transfer power based on inductive coupling. One possibility to increase the transferable power is to use resonators that are able to transfer more power. This requires resonators that are bigger in size, which mainly means that the active magnetic area of the resonators become larger. It is therefore possible to provide wireless power transfer systems with different rated powers by producing wireless power transfer systems with resonators that have different sizes of their active magnetic areas. In this way, it is possible to cover the power requirements from low power applications to high power applications.

However, some applications do limit the size of the active magnetic areas in one dimension of the active magnetic area wherefore enlarging the active magnetic area would result in more rectangular resonators, which in many cases is not optimal for a high efficiency of the IPT system. Furthermore, providing resonators with different rated powers would result in an enlarged development, production, stocking, management and administration effort and therewith of course in higher costs.

Document US 8,796,990 B2 of Paparo et al. discloses a hands free charging system for an electric vehicle with a transformer having a primary coil connected with a charging station and a secondary coil connected with an electric vehicle. The primary coil is arranged on a movable interface plate such that the primary coil may be displaced via a self-alignment mechanism to position the primary coil adjacent to the secondary coil to maximize the inductive power transfer from the primary to the secondary. The system may also include multiple primaries connected in parallel to an input power where each primary may deliver power to a single secondary and where each secondary forms a power output of the charging system. A single primary is designated as a master and controls the current load distribution among the other primaries such that the sum of the charging power of all primaries together does not exceed the rated power of the system.

However, this charging system does not allow for adapting the rated power delivered to at a single system power output such as adapting the power transfer to the requirements of a load connected to that system power output.

### Summary of the invention

It is the object of the invention to create a wireless power transfer arrangement pertaining to the technical field initially mentioned, that enables an easy way to adapt the rated power delivered at a single system power output to the requirements of a particular application, thereby maintaining a high efficiency of the system. It is a further object of the invention to provide a primary as well as a secondary arrangement for such a wireless power transfer arrangement and a corresponding method for wireless power transfer.

The solution of the invention regarding the wireless power transfer arrangement is specified by the features of claim 1. The solution of the invention regarding the primary arrangement is specified by the features of claim 14. The solution of the invention regarding the secondary arrangement is specified by the features of claim 15. And the solution of the invention regarding the method for wireless power transfer is specified by the features of claim 16.

In a wireless power transfer arrangement for wirelessly transferring power from a power input side across an airgap to a power output side, the system includes a power output at the power output side for supplying a system output power to a load. Such a wireless power transfer system may be used to directly power a load such as an electric motor or the like. Such a system may however be preferably used for charging a battery.

According to the invention the wireless power transfer arrangement includes a number N of operative power transfer units, with N being equal or greater than two and wherein each power transfer unit includes a primary side, a secondary side and a unit controller for controlling a power transfer of that power transfer unit from the primary side across the airgap to the secondary side, and wherein the secondary sides of the power transfer units are connected in parallel to provide the system output power.

In this way, each power transfer unit can be designed and built to transfer the power from the primary side to the secondary side with a high efficiency, because the active magnetic areas of the resonators can be chosen accordingly. By just adding a further power transfer unit to the wireless power transfer system the rated power of the system can be increased in an easy and simple way. Further, since the power transfer units may be made more or less equal to each other, only one type of power transfer unit has to be produced and stored to cover a wide range of power requirements which also reduces development, production, stocking, management and administration effort and therewith also the costs.

Since the secondary sides of the power transfer units are connected in parallel the system provides just a single power output which combines the output powers of the single power transfer units to a single system output power. However, one, two or more loads may be connected to the power output of the system to be powered thereby sharing the system output power.

The term operative power transfer unit in the context of this description does refer to those power transfer units in the system that actually may be used for the power transfer. In particular, power transfer units that may be part of the power transfer system but are deactivated, defective, disconnected or otherwise out of operation are not regarded as operative power transfer units. Or in other words, the operative power transfer units are those units that are ready to deliver power to the power output of the system on request. Accordingly, the system may also include non-operative power transfer units that are deactivated or disconnected for example due to repair or maintenance work, due to temporary lower power requirements at the output of or for any other reason.

As mentioned above, each power transfer unit includes a unit controller for controlling the power transfer from the primary side of that power transfer unit across the airgap to the secondary side of that power transfer unit. This means that the power transfer within each power transfer unit is controlled independently from the power transfer of the other power transfer units. The primary sides of the operative power transfer units do not know or do not need to know that there are further power transfer units connected in parallel. In order to provide power at its output each power transfer unit closes a control loop between its secondary side and its own primary side. Each unit controller just has to know how much power its power transfer unit has to provide at its output.

Further, the term single system power output is to be understood such that the outputs of the secondary sides are not used to power different loads such as in US 8,796,990 B2 but that the outputs of the secondary sides are combined to output a single, controlled output power. The combination may be done either at the power output of the power output side of the system or it may also be done between the power output side and the load or it may even be done within the load. In case of a battery, the single outputs of the power transfer units may be fed in parallel to the battery and only within the battery they are combined to form the single system power output. This is for example done in batteries that may be charged with high charging currents in order to distribute the charging current to several conductors.

The secondary side of a power transfer unit may for example include an electronic assembly such as a converter for converting the AC power received by the secondary pad to a DC power that may be provided at the output of the power transfer unit. The secondary side of a power transfer unit may also include further elements such as for communication, control etc.

In a preferred embodiment of the invention, the secondary side of at least one power transfer unit is adapted to be configured as a master secondary side. The secondary sides of the other power transfer units are configured as slave secondary sides, which does mean nothing else than they remain as they are. It could also be said that they just remain normal secondary sides. However those secondary sides that are not configured as the master secondary side the term slave or slave secondary sides is used in connection with this invention.

Preferably, all secondary sides are configured as slave secondary sides by default and only the configuration of the master secondary side changes once the master secondary side is determined. However, it is also possible that it is not clear at start-up whether the secondary sides are slaves or master. So, once the master secondary side is determined, that secondary side is configured as the master and all other operative secondary sides are configured as slaves.

The master secondary side is able to control or at least influence the power provision by all the operative power transfer units. If only one secondary side is adapted to be configured as a master that secondary side will become master every time the system is activated and the other remain slaves. If two or more secondary sides are adapted to be configured as a master, just one of them will actually become master when the system is activated. Accordingly, each time the system is activated, the secondary side of one of the operative power transfer units becomes the master secondary side.

Also, the master secondary side may change during operation of the system, i. e. the current master secondary side is configured as a slave and the new master is configured accordingly.

In a preferred embodiment of the invention, the wireless power transfer arrangement is adapted to identify one of the unit secondary sides as the master secondary side and configure the identified secondary side to operate as the master secondary side.

It does not matter, how the master secondary side is determined among the secondary sides of the operative power transfer units. There are several procedures known in the art how a master device can be identified among a number of generally equal devices.

In one example, the master can be determined by manual configuration. This can for example be done in that each secondary side includes one or more switches such as DIP switches and in that an operator manually adjusts the one or more switches of each secondary side to configure one of them as the master and the remaining as slaves. Such a configuration can also be done by means of pure software configuration, i.e. by adjusting one or more flags within an operating software of each secondary side. Such a software configuration may be done via a user interface directly integrated into each of the secondary sides or it may be done remotely via a wired or wireless communication interface of each of the secondary sides.

In another example the secondary side that has finished its start-up procedure during system start-up first is automatically determined as the master.

Or each secondary side tries to become master in that it sends a message to the other secondary sides via a common communication link during or after start-up and as soon as such a message is answered by another secondary side the sending secondary side becomes master and the answering and all other secondary sides become slaves.

In a further example, the secondary side that best meets one or more given criteria becomes the master. One criterion might be the production date or the serial number of the secondary side device where the secondary side with the latest production date or the most recent serial number becomes the master. Other criteria might include the runtime, the software version, the commissioning date of the secondary sides or any other characteristic of the secondary sides.

In a further preferred embodiment of the invention, the secondary side of all power transfer units is adapted to be configured as the master secondary side. In this way, all secondary sides can be made equal, i.e. they have equal rights and may even be identical. Only once the secondary side of a particular power transfer unit has been elected and configured as the master secondary side that master secondary side becomes a superior secondary side and is able to control or at least influence the power provision by the operative power transfer units.

In a further preferred embodiment of the invention, the secondary side of one power transfer unit is configured as the master secondary side and the master secondary side is adapted to determine the number N of operative power transfer units. Further, the master secondary side is adapted to communicate the number N to the secondary side of the other power transfer units. Accordingly, the slave secondary sides are adapted to receive the number N of operative power transfer units of the wireless power transfer arrangement from the master secondary side.

However, the number N may also be determined by another secondary side and communicated to the master secondary side which then communicates the number N to the other secondary sides. Or the number N may be determined by any of the secondary sides and the number N may be communicated directly to each of the other secondary sides. Further, it is also possible that another unit of the power transfer system such as for example a dedicated controller or the like determines the number N of operative power transfer units and then communicates that number to the master secondary side for forwarding or directly to all secondary sides.

In order to communicate the number N from one secondary side to another secondary side, the secondary sides do in another preferred embodiment of the invention include an appropriate transceiver. By means of these transceivers, the secondary sides may establish a common communication link which might be a wired or a wireless communication link. Since the secondary sides are usually arranged together in the same place a wired communication link is preferred.

Further, the master secondary side is adapted to determine the number N of operative power transfer units by transmitting a call via that common communication link and counting a number of secondary sides answering the call. The master sends a broadcast onto the common communication link and counts how many other secondary sides do answer that broadcast.

In another preferred embodiment of the invention, the wireless power transfer arrangement includes a communication arrangement for establishing a communication link for communication with the load. The load and the wireless power transfer arrangement may for example communicate with each other to coordinate how much power has to be delivered to the load. This is for example done in that the load communicates to the wireless power transfer arrangement the momentary power requirements such as for example in the form of a set value for the amount of current to be delivered to the load. Depending on the load, this set value may vary over time. If the load is for example the battery of a mobile device, the battery management system (BMS) of the battery may communicate to the wireless power transfer arrangement the set value for the charging current.

In a preferred embodiment of the invention, the communication link established by the communication arrangement is the same as the communication link mentioned above for communication between the secondary sides of the power transfer units.

Accordingly, the secondary side of each power transfer unit includes a communication device to communicate with each other via the communication link. This means that the communication arrangement of the wireless power transfer arrangement includes or corresponds to the transceivers of the secondary sides of the power transfer units mentioned above. Accordingly, the communication device of each power transfer unit includes a transceiver for establishing a communication link for communication between the secondary sides and the load, preferably a wired communication link, since the secondary sides and the load are usually arranged within the same mobile device.

In order to avoid unnecessary wiring, the communication link is preferably a wired bus communication system. Depending on the particular application, any suited bus system may be used, either standardized or not. Examples of such buses are HIPPI (High Performance Parallel Interface), IEEE-488, PC Card (PCMCIA), CAN bus (controller area network), eSATA, ExpressCard, Fieldbus, IEEE 1394 interface (FireWire), Lightning, RS-232, RS-485, Thunderbolt, USB (Universal Serial Bus) or any predecessor, variation or successor bus system of these bus systems as well as any other known bus system may be used. Further, any appropriate communication protocol may be used for communication using any of these buses.

In vehicle or automation applications the CAN bus system in combination with the CANopen protocol is preferably used in connection with the invention.

The wireless power transfer arrangement may however include a separate communication arrangement for establishing an additional communication link for communication with the load. This may be either a wired or a wireless communication link and may be chosen to best fit the requirements of the particularly application.

As each power transfer unit controls the power transfer from its input to its output on its own and independently of the power transfer of the other power transfer units, the only thing a particular power transfer unit needs for operation is a set value for its output power.

Now a load usually does know how much power it needs at a particular time and may communicate the amount of needed power to the wireless power transfer arrangement. But the load usually does not know how many power transfer units are present in the wireless power transfer arrangement wherefore the load is usually not able to communicate a separate, specific set value for each of the power transfer units.

There are several ways to overcome that problem. Either the load gets to know the number N of operative power transfer units and may therefore determine a power set value for each of the power transfer units (designated below as the unit power set value) for example by dividing the set value for the system output power by the number N. Instead of equally loading the power transfer units, the load may also determine the unit power set values unequally by loading some of the power transfer units more than others. It does not matter how the load gets to know the number N. The load may for example count the operative power transfer units on its own, either in the same or a different way as the master secondary unit does. Or the master secondary unit communicates to the load the number N once it has determined it.

Another way to overcome that problem is that an additional unit such as an additional controller determines the single unit power set values and communicates them to the secondary side of the single power transfer units through the communication link. Again, the needed power may be equally or unequally distributed among the operative power transfer units.

However, in a preferred embodiment of the invention, each power transfer unit is adapted to receive the system set value for the system output power via the communication link. Preferably, the secondary side of each power transfer unit is adapted to receive the system set value via the communication link.

In an even more preferred embodiment of the invention, the power transfer units do receive the system set value from the load. In the case of a battery, the system set value for the charging current is communicated to the secondary sides by the BMS. However, the load may also communicate the system set value to an additional unit such as a superior controller or to one of the secondary sides, for example to the master secondary side. That secondary side or additional unit then communicates the system set value to the other secondary sides.

Instead of directly receiving the unit power set value, the secondary side of each power transfer unit is preferably adapted to determine the unit power set value for the unit output power of that power transfer unit based on the received system set value for the system output power. In a preferred embodiment of the invention the secondary side of each power transfer unit is adapted to determine the unit power set value for the unit output power by dividing the set value for the overall output power by the number N.

As outlined before, it may have received the number N through the communication link. However, the number N may also be communicated to the secondary sides through another communication link or it may be stored in a memory of the secondary side. The number N may for example be stored there at the installation and configuration of the wireless power transfer arrangement and remain unchanged until the system is reinstalled or reconfigured.

Generally spoken, it does not matter, how a power transfer unit is constructed. As long as such a power transfer unit may controllably transfer power from an electrical power source across the airgap to the load, such a power transfer unit may be used to realise the invention.

But in another preferred embodiment of the invention the primary side of each power transfer unit includes
a) a power input to receive an input power,
b) an input stage for converting the input power to an AC primary output power and
c) a primary resonator for receiving the AC primary output power and inducing a magnetic field for wireless power transfer,
   and wherein the secondary side of each power transfer unit includes
d) a secondary resonator for picking up the magnetic field and converting the power received through the magnetic field to an AC secondary output power and
e) an output stage for converting the AC secondary output power to a DC secondary output power and for providing the DC secondary output power at a power output of the output stage.

The input power usually is received from a power source that delivers power in electrical form. The power source may for example be a power supply network as installed in most buildings. The power source may however also be a power generator that converts other kinds of power such as for example solar power, wind power, water power or the like to electrical power. The power source may also be a battery.

Preferably, all power transfer units are fed by the same power source. But it is also possible that the wireless power transfer arrangement is fed by two or more different power sources where a particular power source feeds one or more power transfer units.

In a preferred embodiment of the invention, the secondary side of each power transfer unit includes a memory for memorising a set of parameters for controlling an operation of that power transfer unit, wherein the set of parameters includes the number N.

In another embodiment of the invention, only one or some but not all of the power transfer units include such a memory. For example, only those power transfer units the secondary side of which is adapted to be configured as a master secondary side includes such a memory.

The memory may generally also be an external memory which the power transfer unit may access or the external memory or a corresponding controller may send the required data to the power transfer unit on request. So, the secondary side may also access or request the number N from an external memory in which that number is stored.

The set of parameters to be stored in the memory includes for examples further data or information that may be relevant for controlling the power transfer of a power transfer unit. The parameters may for example include information about the power transfer unit or parts of it such as temperature, lifetime, up-time or any other value that might be needed for operation of the power transfer unit. But the parameters may for example also include information about the environment such as temperature, humidity etc. And the parameters may for example also include information about the load such as operating condition or the like. In the case of a battery the parameters may for example include information about the battery temperature, the charging condition and so on. In an embodiment of the invention where the load is a battery that does not includes a BMS, a secondary side, preferably the master secondary side may adopt the BMS-function and control the charging process of the battery considering the parameters stored in its memory.

As outlined above, the power transfer units do provide the requested output power independently of each other. Each secondary side receives the unit power set value and then closes a control loop with its own, private primary side, i. e. the primary side of the same power transfer unit via a unit specific communication link. This unit specific communication link may again be a wired communication link. But the unit specific communication link preferably is a wireless communication link because the primary side and the secondary side of a particular power transfer unit are usually not arranged in the same housing. Whereas the primary side most often is mounted stationary and connected to a power source the secondary side is usually arranged within a mobile device as mentioned above that is placed nearby the primary side only occasionally for charging its battery or otherwise supplying it with power.

Accordingly, in another preferred embodiment of the invention, the primary side as well as the secondary side of each power transfer unit includes a transceiver for wireless communication between the primary side and the secondary side of a particular power transfer unit. Or in other words, the communication link is a private communication link just for communication between the primary and the secondary side within one and the same power transfer unit. Preferably, the communication link is a radio communication link such as LTE, UMTS, GSM, WLAN, Bluetooth or the like or any other suitable radio communication technology. Since the primary and the secondary side are arranged in the vicinity of each other during power transfer the communication technology preferably is a short range communication technology such as WLAN or Bluetooth etc. Where a radio communication technology offers different frequency ranges at the location of the system each of these locally available frequency ranges may be chosen. If for example the WLAN technology is to be used, either the 2.4 GHz and/or the 5 GHz band may be used.

As each region in the world may identify certain frequency bands that may be used freely in a given, usually low transmission power range, a radio communication technology that uses such free frequency bands is preferably used.

Whereas each of the power transfer units may use a different communication technology for its internal communication, all power transfer units make preferably use of the same wireless communication technology. As modern radio communication technologies offer a multitude of different communication channels, the power transfer units may simply use different channels for their internal communication such as not to interfere with each other. The power transfer units may however also make use of the same communication channel where each of the power transfer units is assigned a particular identifier or address or the like such as to enable a selective internal communication within the power transfer units. If all power transfer units use the same channel they are able to listen to the communication of the other power transfer units and, in case they detect that a particular situation has occurred, they may take appropriate measures as reasonable or necessary to react to that situation. Such situations may for example include updates, additions or failure of one or more of the power transfer units, a controller or any other component of the system.

The power transfer units installed in a wireless power transmission arrangement may be different from each other. They may for example be of different manufacturers. They may also have different rated or nominal powers. The power transfer units just have to include at least some of the above mentioned features such as the ability to be configured as a master, determine the number N, receive a unit power set value, establish a communication link with the other power transfer units and/or the load, storing at least the number N in a memory and so on.

But in another preferred embodiment of the invention, all power transfer units installed in the wireless power transmission arrangement are identical. The term identical in this context does not mean that the power transfer units actually have to be absolutely equal to each other. They may for example be different versions of the same power transfer unit. They may for example be of the same manufacturer and have the same rated power but may have different hardware, software and/or firmware versions.

This means that in case of a failure of a power transfer unit such as for example a breakdown or a malfunction of a sub-unit such as a primary or a secondary side, the defective unit or sub-unit may be replaced by a working unit or sub-unit easily, just by removing the defective unit or sub-unit and installing the new one.

In a system with N operative power transfer units, the system may deliver a system output power P. However, in case no replacement unit is available, the system is preferably configured to automatically keep operating with the remaining operative N-1 units. Accordingly, if all power transfer units do have the same rated power, the system output power is reduced to (N-1)/N of the previous system output power P.

A primary arrangement for a wireless power transfer arrangement according to the invention includes the elements as described above in connection with the wireless power transfer arrangement according to the invention which are at least two or more primary sides each being connectable to power source and adapted for a parallel power transfer by inductive coupling to corresponding secondary sides of a secondary arrangement positioned close to the primary arrangement.

A secondary arrangement for a wireless power transfer arrangement according to the invention includes the elements as described above in connection with the wireless power transfer arrangement according to the invention which are at least two or more secondary sides arranged in parallel and each being connected to a single system power output and adapted to receive power by inductive coupling from corresponding primary sides of a primary arrangement close to which the secondary arrangement is positioned.

According to the invention the method for wireless power transfer from a power input side across an airgap to a power output side by inductive coupling for supplying a system output power to a load, includes the steps of
a) transferring the power from the power input side across the airgap to the power output side by means of a number N of operative power transfer units, with N being equal or greater than two,
b) controlling a power transfer of each power transfer unit from a primary side of the power transfer unit across the airgap to the secondary side of the power transfer unit by means of a unit controller of that power transfer unit
c) and connecting the secondary sides of the power transfer units in parallel for providing the system output power.

Other advantageous embodiments and combinations of features come out from the detailed description below and the entirety of the claims.

### Brief description of the drawings

The drawings used to explain the embodiments show:
- Fig. 1: A schematic of a wireless power transmission system according to the prior art,
- Fig. 2: a schematic of a wireless power transmission system according to the invention,
- Fig. 3: a schematic of an exemplary embodiment of a load to be powered by a wireless power transmission system according to the invention,
- Fig. 4: a schematic of an exemplary embodiment of a primary side of a power transfer unit,
- Fig. 5: a schematic of an exemplary embodiment of a secondary side of a power transfer unit,
- Fig. 6: a schematic of a charging station including a wireless power transfer arrangement for charging the traction battery of a forklift,
- Fig. 7: a schematic of an input stage of a power transfer unit,
- Fig. 8: a schematic of a primary resonator of a power transfer unit,
- Fig. 9: a schematic of a secondary resonator of a power transfer unit,
- Fig. 10: a schematic of an output stage of a power transfer unit,
- Fig. 11: a schematic of a charging station including the primary sides of a plurality of wireless power transfer arrangements according to the invention.

In the figures, the same components are given the same reference symbols.

### Preferred embodiments

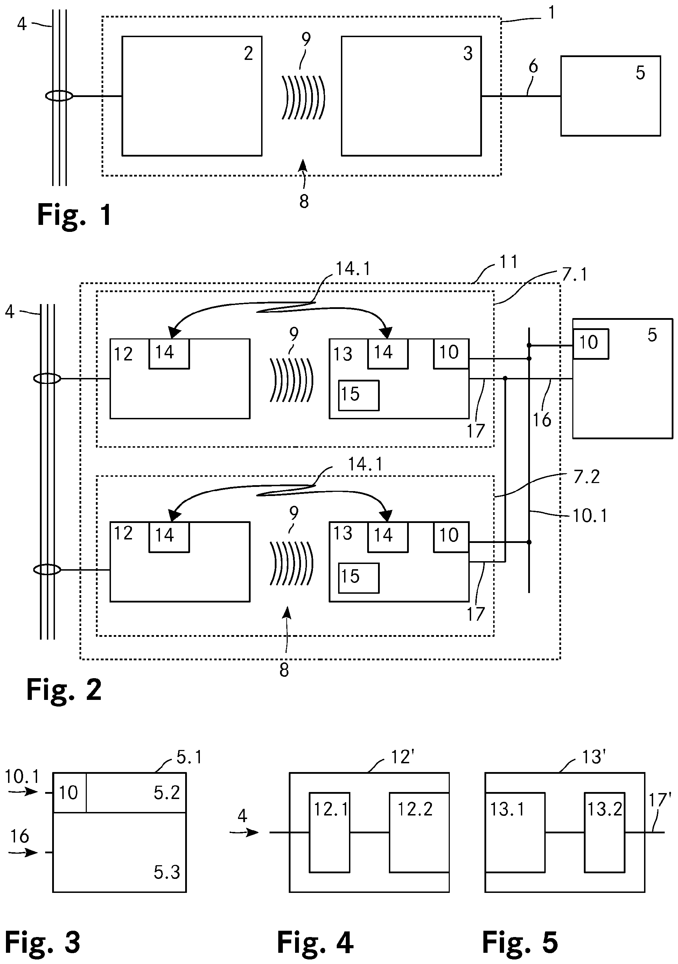

Fig. 1 shows a schematic of a wireless power transmission system 1 according to the prior art. The wireless power transmission system 1 includes a primary side 2 and a secondary side 3. The primary side 2 is connected to a power source which in this case is a power supply network 4. The primary side 2 receives input power from the power supply network 4, processes the input power and produces a magnetic field that extends into the airgap 8 between the primary side 2 and the secondary side 3. This is usually done by means of a primary resonator within the primary side 2. The secondary side 3 picks up the energy transferred via the magnetic field 9, processes it and provides an output power at a power output 6 of the wireless power transmission system 1 to which a load 5 may be connected that is to be supplied with electrical power. To pick up the magnetic field the secondary side 3 usually also includes a resonator that is arranged or rather that may be arranged within the magnetic field 9.

The primary side 2 and the secondary side 3 form a single power transfer device of the wireless power transmission system 1. The components of that device are adapted to meet the requirements of the specific application, particularly the power requirements of the load 5. In order to provide power to different loads that have different power needs, the power transfer device is manufactured with different rated powers and the one that best fits the requirements of the expected load is used.

Fig. 2 schematically shows a wireless power transmission system 11 according to the invention. Contrary to the wireless power transmission system 1 as shown in fig. 1 which includes just a single power transfer device to provide power at the power output 6 the wireless power transmission system 11 includes two power transfer units PTUs 7.1, 7.2 that are arranged in parallel between the power supply network 4 and the single system power output 16 to which the load 5 is connectable. The wireless power transmission system 11 may also include more than two PTUs arranged in parallel. Each PTU 7.1, 7.2 includes a primary side 12 and a secondary side 13 arranged on different sides of the airgap 8. The primary side 12 of each PTU 7.1, 7.2 is connected to the power supply network 4 and produces a magnetic field 9 that extends into the airgap 8 between the primary sides 12 and the secondary side 13. The secondary side 13 of each PTU 7.1, 7.2 picks up the energy transferred via the magnetic field 9, processes it and provides an output power at the unit power output 17 of that PTU 7.1, 7.2. The unit power outputs 17 of the PTUs 7.1, 7.2 then are combined to form the system power output 16 in that the unit power outputs 17 are connected together. Accordingly, the wireless power transmission system 11 includes just a single system power output 16 that combines the power transferred by each of the PTUs 7.1, 7.2 from the power source to provide the system output power.

The primary side 12 and the secondary side 13 of each PTU 7.1, 7.2 include a transceiver 14 to establish a wireless communication link 14.1 for communication between the primary side 12 and the secondary side 13 of a particular PTU 7.1, 7.2. The transceivers 14 may be WLAN or Bluetooth devices where each PTU uses another channel for its internal communication. Each PTU 7.1, 7.2 uses the communication link 14 to control the power transfer from its primary side 12 to its secondary side 13 by closing a control loop between the primary side 12 and the secondary side 13. Each PTU 7.1, 7.2 further may include a controller 15 to control the power transfer and further purposes. In this example, the controller 15 is shown to be part of the secondary side 13, but the controller 15 may also be arranged within the primary side 12 or the controller 15 may be a separate unit arranged on either side of the airgap 8.

Each secondary side 13 as well as the load 5 further include a transceiver 10 for communication among the secondary sides 13 and the load 5. The transceivers 10 are connected to a wired CAN bus 10.1 for wire-bound communication according to the CANopen protocol. The transceivers 10 do accordingly fulfil the CANopen specifications.

In fig. 2 each PTU 7.1, 7.2 is shown to be separately connected to the power supply network 4. However, the wireless power transmission system 11 may also include just a single connection to the power supply network 4 where the power inputted from the power supply network 4 is then distributed to each of the PTUs 7.1, 7.2 internally of the wireless power transmission system 11. Further, instead of being connected to a single power source, here the power supply network 4, the PTUs 7.1, 7.2 may be connected to two or more different power sources to draw the necessary input power.

In another embodiment of the invention, the unit power outputs 17 of the PTUs 7.1, 7.2 are not combined within the wireless power transmission system 11 to form the system power output 16 which is then fed to the load 5. But the unit power outputs 17 are separately fed to the load 5 and are connected together only within the load 5 to form the system power output 16.

Fig. 3 shows a schematic of an exemplary embodiment of a battery 5.1 to be powered by the wireless power transmission system 1. The battery 5.1 includes a BMS 5.2 that is connected to the transceiver 10 for communication via the CAN bus 10.1. The battery 5.1 further includes one or more battery cells 5.3 that are to be charged by the system output power of the wireless power transmission system 11 via the single system power output 16 to which the battery 5.1 is connected.

Referring back to fig. 2, the operation of the wireless power transmission system 11 is explained assuming that the battery 5.1 as shown in fig. 3 is connected to the system power output 16 as the load 5.

At start-up of the wireless power transmission system 11, the system determines one of the secondary sides 13 to be the master secondary side and configures that secondary side accordingly. Assuming that the secondary side 13 of the PTU 7.1 has been determined and configured as the master secondary side, the master secondary side determines the number of operative PTUs 7.1, 7.2 of the wireless power transmission system 11. The secondary side of the PTU 711 does so by sending a call onto the CAN bus 10.1 via its transceiver 10 waiting for the responses of other secondary sides 13. In this case the secondary side 13 of PTU 7.2 answers the call via its transceiver 10. So the master secondary side of PTU 7.1 counts one answer, adds one for itself and therefore determines the number of operative PTUs 7.1, 7.2 to be two. Then the master secondary side of the PTU 7.1 communicates that number to all the operative PTUs 7.1, 7.2 which store that number in a memory, where that memory is for example included in the controller 15. So every PTU 7.1, 7.2 always knows the current number of operative PTUs and has stored this number in its memory.

The determination of the master secondary side may be repeated on a regular or irregular basis and also the determination of the number of operative PTUs by the master secondary side may be repeated on a regular or irregular basis.

The battery 5.1 for example is the traction battery of a vehicle (not shown) that is properly arranged close to the charging station that includes the primary sides 12 of the wireless power transmission system 11 for charging the battery cells 5.3. The battery 5.1 includes a BMS 5.2 that continuously or at least intermittently determines the charging current required at a particular moment and communicates the required charging current via the transceiver 10 onto the CAN bus 10.1. All the PTUs 7.1, 7.2 connected to the CAN bus 10.1 do receive that set value for the overall charging current and on the basis of that overall charging current each of them determines the set value for the unit charging current it has to provide at its unit power output 17. It does so by simply dividing the overall charging current by the number of operative PTUs received from the master secondary side and stored in its memory. Then each PTU is controlled by its controller 15 such as to provide that unit charging current at its unit power output 17.

Finally, the power outputs are combined by connecting them together and providing the requested charging current at the system power output 16.

Fig. 4 and 5 show a schematic of an exemplary embodiment of a primary side 12' and a schematic of an exemplary embodiment of a secondary side 13' of a PTU 7.1, 7.2.

The primary side 12' includes an input stage 12.1 and a primary resonator 12.2. The input stage 12.1 converts the input power received from the power source to an AC output power which is provided to the primary resonator 12.2 which induces the magnetic field for the wireless power transfer.

As indicated in fig. 4, the input stage 12.1 and the primary resonator 12.2 may be arranged within the same housing and connected to each other via a corresponding power connection. And the housing may also include further elements. Such an arrangement may for example be convenient in an application where the secondary resonators may be arranged vertically within a vehicle. The input stages 12.1 and the primary resonators 12.2 of the PTUs may then accordingly be arranged in a combined wallbox that is hanged vertically on a wall of the charging station. In this case the vehicle is driven close to the wallbox such that the secondary resonators are close to the primary resonators to charge the battery of the vehicle.

But the input stage 12.1 and the primary resonator 12.2 may also be arranged in different housings such that the input stage is arranged within a wallbox and the primary resonator 12.2 is arranged within a separate resonator box that is connected to the wallbox by means of a power cable or other suitable power connection. Both the wallbox and the resonator box may include further elements. Such an arrangement may for example be convenient in an application where the secondary resonators are arranged within a vehicle horizontally and close to the under-floor of the vehicle. The input stages 12.1 of the PTUs may then accordingly be arranged in a power box that may for example be hanged vertically on a wall or on the floor of the charging station or anywhere else within or outside the charging station. And the primary resonators 12.2 of the PTUs may then be arranged in a resonator box that is for example placed on the floor of the charging station and connected to the power box by means of a power cable. Then the vehicle may be driven over the resonator box such that the secondary resonators within the vehicle are positioned closely above the primary resonators in the resonator box to charge the battery of the vehicle.

Further, instead of providing a separate wallbox for the primary sides 12 of each PTU and arranging them closely side by side, all or some of the primary sides 12 of the PTUs of the wireless power transfer arrangement may be arranged within the same power box. And accordingly, all or some of the input stages of the PTUs may be arranged within the same power box and all or some of the primary resonators of the PTUs may be arranged within the same resonator box.

The secondary side 13' includes a secondary resonator 13.1 and an output stage 13.2. The secondary resonator 13.1 picks up the magnetic field induced by the primary resonator 12.2 and converts the power received through the magnetic field to an AC output power which is provided to the output stage 13.2. The output stage 13.2 converts the AC output power to a DC output power provided at the unit power output 17' of the PTU.

Again, the secondary side of a PTU may be provided as a combined device including the secondary resonator and the output stage and may be arranged within a mobile device as most appropriate to the application. But the secondary resonator and the output stage may also be separate devices connected to each other by means of a power cable or other suitable power connection. And again, the secondary sides of all PTUs may be provided as separate devices or as a single device including all or some secondary sides. And in the case of separated secondary resonators and output stages the secondary resonators of all or some PTUs as well as the output stages of all or some PTUS may be provided as separate devices or as a single device. The term device in this connection may be interpreted as a pure functional device or it may be regarded as a physical device within an own housing. Regarding the term device in this connection it is to be understood that the device may be either arranged within a housing or may be provided without a housing as a physical unit.

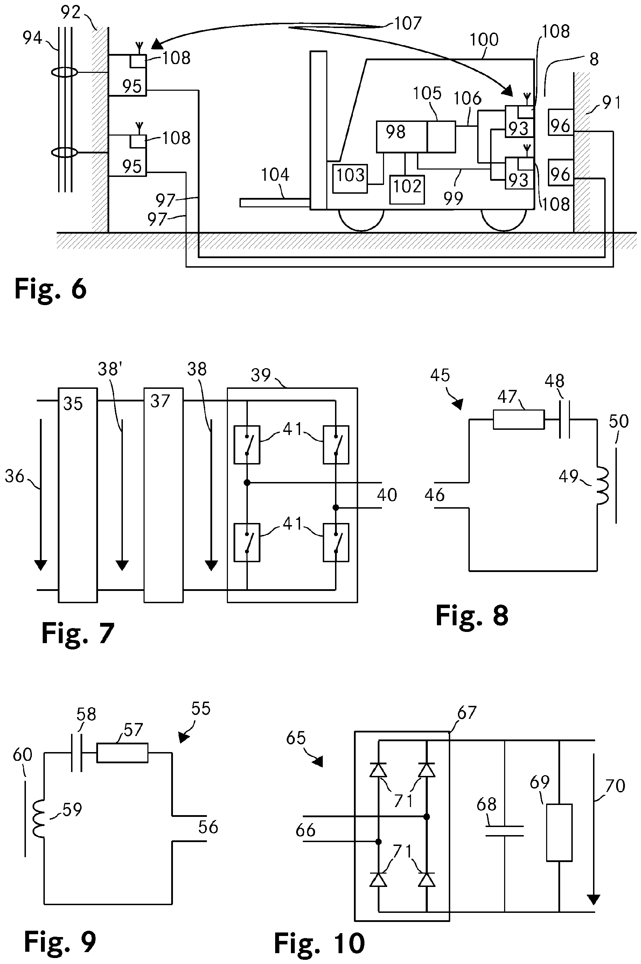

Fig. 6 shows a schematic of a charging station including a wireless power transfer arrangement for charging the traction battery 98 of a forklift 100.

The wireless power transfer arrangement in this embodiment includes two PTUs. The input stage 95 of each PTU is separately mounted on a wall 92 in or near the charging station and is separately connected to a power supply network 94. The primary resonator 96 of each PTU is mounted on another wall 91 of the charging station, for example the wall 91 of a workshop, garage, a car port, a parking area, a warehouse or the like of the charging station. The primary resonators 96 may also be mounted on the same wall as the input stages 95 or they may be integrated partly or fully into the wall 91 or the floor of the charging station such that it would require less or no extra space near the wall 91 or at the floor. Each primary resonator 96 is connected to the input stage 95 of its PTU by means of a fixed power cable 97.

The forklift 100 includes the secondary sides 93 of the PTUs. The forklift 100 further includes a battery 98 with a BMS 105 (battery management system) and two electric motors 102, 103 where the electric motor 102 is used for driving the forklift 100 and the electric motor 103 is used for driving the lift 104 of the forklift 100. The BMS 105 manages the energy flow into and usually also out of the battery 98.

For providing the charging current to the battery 98 of the forklift 100, the power outputs of the secondary sides 93 are connected together and to the battery 98 via the charging line 99 and the secondary sides 93 are also connected to the batteries 98 BMS 105 via the communication bus 106. For charging the battery 98 the BMS 105 defines the charging current allowed or needed at a particular point in time and provides this set value to the secondary side 93 via the communication bus 106. Within the secondary sides 93 the set value for each of the PTUs is determined as described above by receiving the system power set value from the BMS 105 and calculating therefrom the unit power set value by dividing the system power set value by the number of operative PTUs that has been previously received from the master secondary side through the communication bus 106. The output of each PTU is controlled by closing a control loop between the input stage 95 and the secondary side 93 of each PTU via a separate communication channel of the wireless communication link 107 established by the wireless transceivers 108 included in the secondary sides 93 as well as in the input stages 95. The wireless transceivers 108 in the primary may however also be provided within the primary resonators 96.

Fig. 7 shows a schematic of an exemplar embodiment of an input stage of a PTU for use in a wireless power transfer arrangement according to the invention. The input stage is connected to an AC power source providing an AC input power 36. An AC/DC converter 35 converts the AC input power 36 to a fixed DC intermediate power 38' which then is converted by a DC/DC converter 37 to a variable DC intermediate power 38. The fixed DC intermediate power 38' may for example be power at 800 V and the variable DC intermediate power 38 may for example be a DC power between 0 V and 800 V, depending on the actual power need at the secondary. The variable DC intermediate power 38 is fed to an inverter 39 that converts the variable DC power 38 to an AC output power 40. For converting the variable DC intermediate power 38 to the AC output power 40, the inverter 39 includes four controllable switches 41 in a full bridge configuration. Soft switching may be used for an efficient operation of the inverter 39. Instead of providing an additional DC/DC stage between the AC/DC converter and the DC/AC inverter for controlling the voltage, the DC/AC inverter may be used for voltage control. In this case however soft switching may not be used anymore to switch the switches of the DC/AC inverter.

The frequency and the amount of power provided at the output power 40 can be controlled by controlling the switching of the switches 41, for example by a PWM (pulse width modulation) where not only the duty cycle but also the frequency of the pulses may be controlled.

Accordingly, to control the power transfer the frequency may be controlled by controlling the frequency of the inverter 39 and/or the variable DC intermediate power 38 at the input of the inverter 39.

MOSFETs (metal oxide semiconductor field effect transistors) are often used as controllable switches in such converters and are also preferably used in the invention. However, other types and kinds of controllable switches such as other transistors, thyristors or triacs may be used.

The input stage may not only include those elements shown in fig. 7, but usually also includes further elements such as filters etc. to optimise its operation.

Generally, different types of input stages may be used in a PTU for use in a wireless power transfer arrangement according to the invention as long as it converts the input power provided into a controllable AC output power.

Fig. 8 shows a schematic of an exemplar embodiment of a primary resonator 45 of a PTU for use in a wireless power transfer arrangement according to the invention. The primary resonator 45 may for example be connected to an input stage as shown in fig. 7 such that it receives an AC input power 46 at its input.

The primary resonator 45 essentially includes a tuned circuit with a resistor 47, a capacitor 48 and a coil 49 connected in series. By applying an AC power to the input of the primary resonator 45 the primary resonator 45 starts oscillating thereby inducing a magnetic field that is emitted into the zone around the resonator. The shape, the run and the distribution of the magnetic field lines may however be influenced by certain measures. So, one or more field guiding elements, here in the form of a magnetic core 50 are provided to direct the magnetic field into a direction as desired by the particular application. Usually, the magnetic field lines are modified such that most of the energy transferred into the magnetic field may be picked up by the receiving resonator in order to reduce or minimise losses.

Fig. 9 shows a schematic of a secondary resonator 55 of a PTU for use in a wireless power transfer arrangement according to the invention. The secondary resonator 55 may for example be used to pick up the magnetic field of the primary resonator 45 as shown in fig. 8.

The secondary resonator 55 largely corresponds to the primary resonator 45. It essentially also includes a tuned circuit with a resistor 57, a capacitor 58 and a coil 59 connected in series. By properly arranging the secondary resonator 55 within the magnetic field produced by the primary resonator 45, it may pick up the energy transferred via the magnetic field and convert it to an AC output power 56 provided at its output. In order to pick up as much energy from the magnetic field, i. e. as much of the magnetic field lines as possible, the secondary resonator 55 also includes one or more flux guiding elements, here also in the form of a magnetic core 60.

Fig. 10 shows a schematic of an exemplar embodiment of an output stage of a PTU for use in a wireless power transfer arrangement according to the invention. The output stage includes an AC/DC converter 65 that is connected to the output of a secondary resonator such as for example the secondary resonator 55 shown in fig. 9. The AC/DC converter 65 converts an AC power 66 received at its input to a DC output power 70 provided at its output. In this embodiment of the invention, the AC/DC converter includes a rectifier 67 with four rectifying elements in a full bridge configuration, here four diodes 71, followed by a bulk capacitor 68 and an output filter 69 to shape the DC output power 70. Of course, the rectifier 67 may also be implemented using synchronous rectifiers such as FETs (field effect transistor) or the like. The AC/DC converter 65 may also include further elements not shown in fig. 10.

The DC output power 70 provides a DC current at a specific DC voltage and is then combined with the DC output of the output stages of the other PTUs in the system to provide the system output power which can be used for various purposes.

Generally, different types of converters may be used to convert the AC input provided by the secondary resonator into a DC output. The DC output may also be stepped up or down as required by the particular application. And it would also be possible to again convert the DC output into an AC output with given characteristics as required by the particular application.

One of the main applications as already described above is the application of such a wireless power transfer arrangement as a charger for charging a battery such as the traction battery of an electric vehicle. Such a wireless power transfer arrangement may however be used in any other application requiring a controllable DC input power such as for example handheld or other mobile devices that need electric power to be operated such as for example phones, electric toothbrushes etc. The invention is usually however used in applications that need more energy to be operated and therefore include batteries with a higher capacity such as some dozens, hundreds or even thousands of Ah. Such high power capacities are achieved by arranging two, three or more PTUs as described above in parallel.

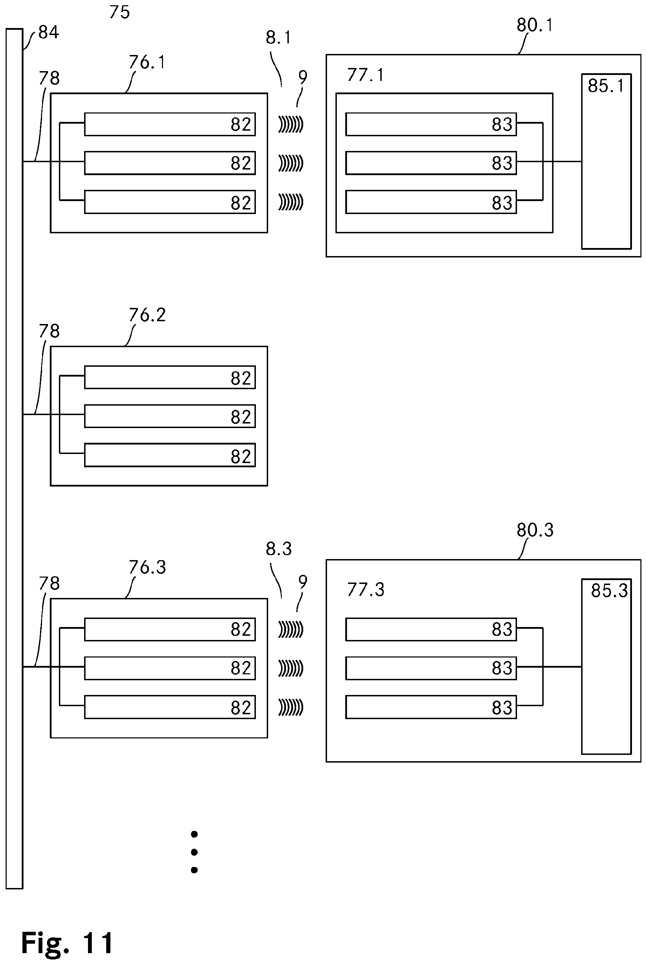

Fig. 11 shows a schematic of a charging station 75 including the primary arrangements 76.1, 76.2, 76.3 of a plurality of wireless power transfer arrangements according to the invention. Each primary arrangement 76.1, 76.2, 76.3 is adapted to deliver power to a corresponding secondary arrangement 77.1, 77.2 in case a vehicle 80.1, 80.2 that includes such a secondary arrangement 77.1, 77.2 is placed close to one of the primary arrangements 76.1, 76.2, 76.3.

Each primary arrangement 76.1, 76.2, 76.3 includes three primary sides 82 wherein each primary side 82 is connected to a power supply network 84 of the charging station 75 via a power connection 78. Each primary side 82 is adapted as described before to produce a magnetic field 9 thereby transferring power from the power supply network 84 to a corresponding secondary side of a secondary arrangement positioned close to it.

As shown in fig. 11 a first vehicle 80.1 with such a secondary arrangement 77.1 and a traction battery 85.1 is positioned across an airgap 8.1 close to the primary arrangement 76.1 and a second vehicle 80.3 with such a secondary arrangement 77.3 and a traction battery 85.3 is positioned across an airgap 8.3 close to the primary arrangement 76.3. But no vehicle is positioned close to the primary arrangement 76.2. Each of the secondary arrangements 77.1, 77.2 includes three secondary sides 83.

Accordingly power from the power supply network 84 is transferred by means of the primary arrangement 76.1 through the airgap 8.1 to the secondary arrangement 77.1 of the vehicle 80.1 to charge the battery 85.1 as required. And power from the power supply network 84 is transferred by means of the primary arrangement 76.3 through the airgap 8.3 to the secondary arrangement 77.3 of the vehicle 80.3 to charge the battery 85.3 as required. But since no vehicle is positioned near the primary arrangement 76.2 no power is drawn from the power supply network 84 and no magnetic field is produced by the primary sides 82 of the primary arrangement 76.2.

In summary, it is to be noted that the invention enables to provide a wireless power transfer arrangement, that offers an easy way to adapt the rated power delivered at a single system power output to the requirements of a particular application, simply by adapting the number of power transfer units of the system, thereby maintaining a high efficiency of the system. The same is obviously true for the corresponding method for wireless power transfer.

## Claims

1. Wireless power transfer arrangement for wirelessly transferring power from a power input side across an airgap to a power output side, including a power output at the power output side for supplying a system output power to a load, preferably for charging a battery, **characterised in that** the wireless power transfer arrangement includes a number N of operative power transfer units, with N being equal or greater than two and wherein each power transfer unit includes a primary side, a secondary side and a unit controller for controlling a power transfer of that power transfer unit from the primary side across the airgap to the secondary side, and wherein the secondary sides of the power transfer units are connected in parallel to provide the system output power.

2. Wireless power transfer arrangement according to claim 1, wherein the secondary side of at least one, preferably all of the power transfer units is adapted to be configured as a master secondary side.

3. Wireless power transfer arrangement according to claim 2, wherein the wireless power transfer arrangement is adapted to identify one of the unit secondary sides as the master secondary side and configure the identified secondary side to operate as the master secondary side.

4. Wireless power transfer arrangement according to any of claims 2 or 3, wherein the secondary side of one power transfer unit is configured as the master secondary side and wherein the master secondary side is adapted to determine the number N and to communicate the number N to the secondary side of the other power transfer units.

5. Wireless power transfer arrangement according to claim 4, wherein the master secondary side is adapted to determine the number N by transmitting a call via a common communication link and counting a number of secondary sides answering the call.

6. Wireless power transfer arrangement according to any of claims 1 to 5, including a communication arrangement for establishing a communication link for communicating with the load.

7. Wireless power transfer arrangement according to claim 6, wherein the secondary side of each power transfer unit includes a communication device to communicate with each other via the communication link, wherein the communication link preferably is a wired communication link such as for example a CAN bus.

8. Wireless power transfer arrangement according to any of claims 1 to 7, wherein each power transfer unit is adapted to receive a system set value for the system output power of the wireless power transfer arrangement, preferably via the communication link and preferably from the load .

9. Wireless power transfer arrangement according to claim 8, wherein the secondary side of each power transfer unit is adapted to determine a unit power set value for the unit output power of that power transfer unit based on the system set value for the system output power, preferably by dividing the set value for the overall output power by the number N.

10. Wireless power transfer arrangement according to claim 9, wherein the primary side of each power transfer unit includes
a) a power input to receive an input power,
b) an input stage for converting the input power to an AC primary output power and
c) a primary resonator for receiving the AC primary output power and inducing a magnetic field for wireless power transfer,
and wherein the secondary side of each power transfer unit includes
d) a secondary resonator for picking up the magnetic field and converting the power received through the magnetic field to an AC secondary output power and
e) an output stage for converting the AC secondary output power to a DC secondary output power and for providing the DC secondary output power at a power output of the output stage.

11. Wireless power transfer arrangement according to any of claims 1 to 10, wherein the secondary side of each power transfer unit includes a memory for memorising a set of parameters for controlling an operation of that power transfer unit, wherein the set of parameters includes the number N.

12. Wireless power transfer arrangement according to any of claims 1 to 11, wherein the primary side as well as the secondary side of each power transfer unit includes a transceiver for wireless communication between the primary side and the secondary side of the power transfer unit, preferably a transceiver for radio communication such as LTE, UMTS, GSM, WLAN, Bluetooth or the like.

13. Wireless power transfer arrangement according to any of claims 1 to 12, wherein all power transfer units are identical.

14. Primary arrangement for a wireless power transfer arrangement according to any of claims 1 - 13.

15. Secondary arrangement for a wireless power transfer arrangement according to any of claims 1 - 13.

16. Method for wireless power transfer from a power input side across an airgap to a power output side by inductive coupling for supplying a system output power to a load, preferably for charging a battery, **characterised by** the steps of
a) transferring the power from the power input side across the airgap to the power output side by means of a number N of operative power transfer units, with N being equal or greater than two,
b) controlling a power transfer of each power transfer unit from a primary side of the power transfer unit across the airgap to the secondary side of the power transfer unit by means of a unit controller of that power transfer unit
c) and connecting the secondary sides of the power transfer units in parallel for providing the system output power.
